(19) Europäisches Patentamt
European Patent Office
Office européen des brevets

(11) Veröffentlichungsnummer: **0 255 901 B1**

(12) **EUROPÄISCHE PATENTSCHRIFT**

(45) Veröffentlichungstag der Patentschrift: **15.01.92**

(51) Int. Cl.[5]: **C08K 13/04**, C08L 77/00, //(C08K13/04,3:02,3:22,7:04), (C08L77/00,21:00)

(21) Anmeldenummer: **87110740.5**

(22) Anmeldetag: **24.07.87**

Die Akte enthält technische Angaben, die nach dem Eingang der Anmeldung eingereicht wurden und die nicht in dieser Patentschrift enthalten sind.

# (54) Flammgeschützte verstärkte Polyamidformmassen mit heller Einfärbung.

(30) Priorität: **07.08.86 DE 3626768**

(43) Veröffentlichungstag der Anmeldung: **17.02.88 Patentblatt 88/07**

(45) Bekanntmachung des Hinweises auf die Patenterteilung: **15.01.92 Patentblatt 92/03**

(84) Benannte Vertragsstaaten: **BE DE FR GB NL**

(56) Entgegenhaltungen: **EP-A- 0 125 483**
**DE-A- 1 931 387**

(73) Patentinhaber: **BASF Aktiengesellschaft**
**Carl-Bosch-Strasse 38**
**W-6700 Ludwigshafen(DE)**

(72) Erfinder: **Plachetta, Christoph, Dr.**
**Albert-Einstein-Allee 12**
**W-6703 Limburgerhof(DE)**
Erfinder: **Reimann, Horst, Dr.**
**Adelheidstrasse 26**
**W-6520 Worms 1(DE)**
Erfinder: **Steinberger, Rolf, Dr.**
**Am Moenchhof 47**
**W-6707 Schifferstadt(DE)**
Erfinder: **Theysohn, Rainer, Dr.**
**Am Bruch 38**
**W-6710 Frankenthal(DE)**
Erfinder: **Weiss, Hans-Peter, Dr.**
**Pfalzring 75**
**W-6704 Mutterstadt(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft thermoplastische Formmassen, enthaltend

A) 10 - 90 Gew.% eines Polyamids,
B) 7 - 60 Gew.% eines verstärkenden Füllstoffs,
C) 1 - 40 Gew.% Titandioxid,
D) 1 - 20 Gew.% roten Phosphor, und
E) 1 - 40 Gew.% eines Kautschuks.

Weiterhin betrifft die Erfindung die Verwendung derartiger Formmassen zur Herstellung von Formkörpern und die aus den Formmassen erhältlichen Formkörper.

Aus der DE-AS-19 31 387 ist bekannt, daß roter Phosphor ein wirksames Flammschutzmittel für verstärkte oder gefüllte Polyamide ist. Nachteilig ist jedoch, daß der rote Phosphor die Polyamide tiefrot oder dunkelbraun färbt, was für manche Anwendungszwecke nicht akzeptabel ist.

Zur Vermeidung dieser Nachteile wurden ungefärbte Flammschutzmittel, z.B. halogenierte organische Verbindungen, oder stickstoffhaltige Verbindungen z.B. Melamincyanurat (DE-OS 27 40 092) als Flammschutzmittel eingesetzt.

Halogenierte organische Verbindungen haben jedoch auf die Kriechstromfestigkeit der aus den Formmassen hergestellten Formkörper einen negativen Einfluß, so daß derart ausgerüstete Formkörper auf dem Gebiet der Elektrotechnik nicht eingesetzt werden können. Außerdem sind zur Verbesserung der Wirksamkeit Synergisten wie Antimontrioxid erforderlich, die größtenteils toxikologisch sehr bedenklich sind. Das gleiche gilt für die im Brandfall freigesetzten halogenierten organischen Verbindungen und den Chlorwasserstoff, der zudem noch stark korrosiv wirkt.

Der Verwendung von Melamincyanurat als Flammschutzmittel in verstärkten Polyamiden steht die Dochtwirkung des verstärkenden Füllstoffs entgegen (vgl. EP-A-19768).

Als Alternative zum Ersatz des roten Phosphors durch andere Flammschutzmittel mit den vorstehend geschilderten Nachteilen ist es auch möglich, die mit rotem Phosphor ausgerüsteten Polyamide mit Weißpigmenten, wie z.B. Titandioxid oder Zinksulfid, zu überfärben.

Aus der DE-OS 22 26 932 ist jedoch bekannt, daß die mit harten anorganischen Pigmenten wie Titandioxid pigmentierten verstärkten Polyamide durch die Kerbwirkung des Titandioxids auf den verstärkenden Füllstoff wesentlich schlechtere mechanische Eigenschaften aufweisen als die entsprechenden unpigmentierten Werkstoffe.

Die Verwendung des weicheren Zinksulfids ist deshalb nicht möglich, da die chemische Stabilität des roten Phosphors (bezüglich Phosphin- und Phosphorsäurebildung) im Polyamid wesentlich verschlechtert wird.

Aufgabe der vorliegenden Erfindung war es, die rote Farbe des als Flammschutzmittel verwendeten Phosphors in flammgeschützten verstärkten Polyamiden mit Weißpigmenten zu überfärben, ohne die Stabilität des Phosphors herabzusetzen und die guten Verstärkungseigenschaften der verstärkenden Füllstoffe wesentlich zu beeinflussen.

Diese Aufgabe wird erfindungsgemäß durch die eingangs definierten thermoplastischen Formmassen gelöst.

Die als Komponente A) eingesetzten Polyamide sind an sich bekannt. Halbkristalline oder amorphe Harze mit einem Molekulargewicht (Gewichtsmittelwert) von mindestens 5000, wie sie z.B. in den deutschen Offenlegungsschriften 20 71 250, 20 71 251, 21 30 523, 21 30 948, 22 41 322, 23 12 966, 25 12 606 und 33 93 210 beschrieben werden, sind bevorzugt.

Beispiele hierfür sind Polyamide, die sich von Lactamen mit 7 - 13 Ringgliedern ableiten, wie Polycaprolactam, Polycapryllactam und Polylaurinlactam, sowie Polyamide, die durch Umsetzung von Dicarbonsäuren mit Diaminen erhalten werden. Als Dicarbonsäuren sind Alkandicarbonsäuren mit 6 bis 12, insbesondere 6 bis 10 Kohlenstoffatomen, und aromatische Dicarbonsäuren einsetzbar. Hier seien nur Adipinsäure, Azelainsäure, Sebacinsäure, Dodecandisäure und Terephthal- und/oder Isophthalsäure genannt.

Als Diamine eignen sich besonders Alkandiamine mit 6 bis 12, insbesondere 6 bis 8 Kohlenstoffatomen, sowie m-Xylylendiamin, Di-(4-aminophenyl)-methan, Di-(4-aminocyclohexyl)-methan, 2,2-Di-(4-aminophenyl)-propan oder 2,2-Di-(4-aminocyclohexyl)-propan. Weiterhin sind Polyamide, die durch Copolymerisation zweier oder mehrerer der vorgenannten Monomeren erhältlich sind, oder Mischungen mehrerer Polyamide geeignet.

Verfahren zur Herstellung dieser Polyamide wie auch die Polyamide selbst sind an sich bekannt und in der Literatur beschrieben, so daß sich hier nähere Angaben erübrigen.

Die relative Viskosität der Polyamide liegt im allgemeinen im Bereich von 2,2 bis 4,5, gemessen in

1gew.%iger Lösung in 96%iger Schwefelsäure bei 25° C.

Der Anteil der Komponente A) an den erfindungsgemäßen Formmassen beträgt 10 bis 90, vorzugsweise 20 bis 70 und insbesondere 25 bis 60 Gew.%, bezogen auf das Gesamtgewicht der Formmassen.

Als verstärkende Füllstoffe B) sind prinzipiell alle Füllstoffe geeignet, die eine Verbesserung der mechanischen Eigenschaften der Formmassen mit sich bringen. Bevorzugt werden faserförmige Füllstoffe, wie Glasfasern, Kohlenstoff-Fasern oder auch faserförmige Silikate, wie Wollastonit. Auch Glaskugeln können vorteilhaft eingesetzt werden.

Bei der Verwendung von Glasfasern können diese zur besseren Verträglichkeit mit dem Polyamid mit einer Schlichte und einem Haftvermittler ausgerüstet sein. Im allgemeinen haben die Glasfasern einen Durchmesser im Bereich von 6 bis 20 $\mu$m. Die Einarbeitung in die Formmassen kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Der Anteil der verstärkenden Füllstoffe B) an den erfindungsgemäßen Formmassen beträgt 7 bis 60, vorzugsweise 10 bis 55 und insbesondere 15 bis 50 Gew.%, bezogen auf das Gesamtgewicht der Formmassen.

Titandioxid C) wird in Mengen von 1 bis 40, vorzugsweise 2 bis 30 und insbesondere 5 bis 25 Gew.%, bezogen auf das Gesamtgewicht der Formmassen, eingesetzt. Es können sowohl Rutil-, Anatas- als auch Brookit-Typen eingesetzt werden. Die mittlere Teilchengröße, d.h. die Teilchengröße oberhalb und unterhalb der die Teilchengröße von jeweils 50 Gew.% der Teilchen liegt ($d_{50}$), liegt vorzugsweise im Bereich von 0,0001 bis 0,01 mm, insbesondere im Bereich von 0,0001 bis 0,001 mm.

Das Titandioxid kann im allgemeinen auch als Batch im als Komponente E verwendeten Kautschuk in die Massen eingearbeitet werden. Die Konzentration des $TiO_2$ in diesem Batch kann bis zu 80, vorzugsweise bis zu 60 Gew.%, bezogen auf den Kautschuk, betragen.

Zur besseren Einarbeitung in die Formmassen kann das eingesetzte Titandioxid oberflächlich mit an sich bekannten anorganischen oder organischen Verbindungen (Haftvermittlern) beschichtet sein.

Der als Flammschutzmittel D) eingesetzte rote Phosphor kann direkt, wie er kommerziell erhältlich ist, eingesetzt werden. Es sind jedoch auch Produkte im Handel, in denen der rote Phosphor oberflächlich mit niedermolekularen flüssigen Substanzen wie Siliconöl, Paraffinöl oder Estern der Phthalsäure oder Adipinsäure oder Polymeren oder Oligomeren beschichtet ist. Außerdem sind Konzentrate von rotem Phosphor, z.B. in einem Polyamid, als Flammschutzmittel geeignet.

Die mittlere Teilchengröße ($d_{50}$) der in den Formmassen verteilten Phosphorpartikel liegt bevorzugt im Bereich von 0,0001 bis 0,5, insbesondere von 0,001 bis 0,2 mm.

Als Komponente E) enthalten die erfindungsgemäßen Formmassen 1 bis 40, insbesondere 5 bis 35 und besonders bevorzugt 8 bis 30 Gew.% eines Kautschuks.

Prinzipiell sind alle Kautschuke geeignet, die in Abmischung mit Polyamiden eine Verbesserung der Schlagzähigkeit gegenüber reinem Polyamid mit sich bringen.

Im allgemeine n handelt es sich dabei um Copolymerisate, die bevorzugt aus mindestens zwei der folgenden Monomeren als Hauptkomponenten aufgebaut sind: Ethylen, Propylen, Butadien, Isobuten, Isopren, Chloropren, Vinylacetat, Styrol, Acrylnitril und Acryl- und Methacrylsäureester mit 1 bis 18 C-Atomen in der Alkoholkomponente.

Kautschuke, die reaktive Komponenten enthalten, die eine Haftung mit den Amin- oder Carboxylendgruppen des Polyamids ermöglichen, werden dabei bevorzugt. Als reaktive Komponenten seien olefinisch ungesättigte Carbonsäuren und deren Anhydride genannt.

Kautschuke E) werden z.B. in Houben-Weyl, Methoden der organischen Chemie, Bd. 14/1 (Georg-Thieme-Verlag, Stuttgart, 1961), Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Als erste bevorzugte Gruppe sind die sogenannten Ethylen-Propylen (EPM) bzw. Ethylen-Propylen-Dien-(EPDM)-Kautschuke zu nennen, die vorzugsweise ein Verhältnis von Ethylenresten zu Propylenresten im Bereich von 40:60 bis 90:10 aufweisen.

Die Mooney-Viskositäten (MLI+4/100° C) solcher unvernetzter EPM bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100° C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo-(5.2.1.0.2.6)-3,8-decadien oder deren Mischungen genannt. Bevorzugt werden Hexadien-1,5,5-Ethylidennorbornen und Dicyclopentadien. Der Diengehalt der EPDM-Kautschuke beträgt vorzugsweise 0,5 bis 50, insbesondere 1 bis 8 Gew.%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien nur Acrylsäure, Methacrylsäure und deren Derivate sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren, wie z.B. Maleinsäure und Fumarsäure bzw. Derivate dieser Säuren, wie z.B. Ester und Anhydride, und/oder Epoxy-Gruppen enthalten. Diese Dicarbonsäurederivate bzw. Epoxygruppen werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

$R_1C(COOR_2)=C(COOR_3)R_4$ (I)

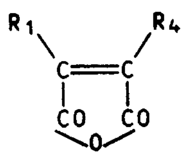

(II)

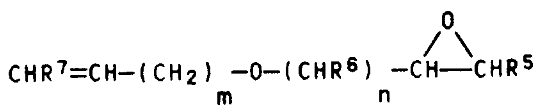

(III)

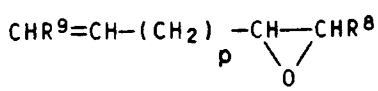

(IV)

wobei $R^1$ - $R^9$ Wasserstoff oder Alkylgruppen mit 1 bis 6 C-Atomen darstellen und m eine ganze Zahl von 0 bis 20, n eine ganze Zahl von 0 bis 10 und p eine ganze Zahl von 0 bis 5 ist.

Bevorzugt sind $R^1$ - $R^7$ Wasserstoff, und m hat den Wert 0 oder 1 und n ist 1. Die entsprechenden Verbindungen sind Maleinsäure, Fumarsäure, Maleinsäureanhydrid, Alkylglycidylether oder Vinylglycidylether.

Bevorzugte Verbindungen der Formeln I, II und III sind Maleinsäure, Maleinsäureanhydrid und Epoxygruppen-enthaltende Ester der Acrylsäure und/oder Methacrylsäure, wobei Glycidylacrylat und Glycidylmethacrylat besonders bevorzugt werden.

Der Ethylengehalt der Copolymeren liegt im allgemeinen im Bereich von 50 bis 98 Gew.%, der Anteil an Epoxygruppen enthaltenden Monomeren und der Anteil des Acrylsäure- und/oder Methacrylsäureesters jeweils im Bereich von 1 bis 49 Gew.%.

Besonders bevorzugt sind Copolymerisate aus

| | |
|---|---|
| 50 bis 98, | insbesondere 60 bis 95 Gew.% Ethylen, |
| 0,5 bis 40, | insbesondere 3 bis 20 Gew.% Glycidylacrylat und/oder Glycidylmethacrylat, Acrylsäure und/oder Maleinsäureanhydrid, |
| 1 bis 45, | insbesondere 10 bis 35 Gew.% n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur. Entsprechende Verfahren sind in der Literatur beschrieben.

Der Schmelzindex der Ethylencopolymeren liegt im allgemeinen im Bereich von 1 bis 80 g/10 min (gemessen bei 190 °C und 2,16 kg Belastung).

Bevorzugte Elastomere (Kautschuke) C) sind weiterhin Pfropfcopolymerisate mit Butadien, Butadien/Styrol-, Butadien/Acrylnitril und Acrylestern, wie sie z.B. in den DE-A-16 94 173 und DE-A-23 48

377 beschrieben werden.

Von diesen sind insbesondere die sogenannten ABS-Polymerisate zu nennen, wie sie in den DE-A-20 35 390, DE-A-22 48 242 und der EP-A-22 216 beschrieben werden, wobei letztere besonders bevorzugt sind.

Als Kautschuk C) können auch Pfropfpolymerisate aus

| | |
|---|---|
| 25 bis 98 Gew.% | eines Acrylatkautschuks mit einer Glasübergangstemperatur von unter -20 °C als Pfropfgrundlage (Basispolymer) |

und

| | |
|---|---|
| 2 bis 75 Gew.% | eines copolymerisierbaren ethylenisch ungesättigten Monomeren, dessen Homo- bzw. Copolymerisate eine übergangstemperatur von mehr als 25 °C aufweisen, als Pfropfauflage (Pfropfhülle) |

eingesetzt werden.

Die Pfropfgrundlage sind Acrylat bzw. Methacrylatkautschuke, wobei bis zu 40 Gew.% weiterer Comonomerer enthalten sein können. Die $C_1$-$C_8$-Ester der Acrylsäure bzw. Methacrylsäure sowie deren halogenierte Derivate wie auch aromatische Acrylsäureester und deren Mischungen werden bevorzugt. Als Comonomere in der Pfropfgrundlage seien Acrylnitril, Methacrylnitril, Styrol, $\alpha$-Methylstyrol, Acrylamide, Methacrylamide sowie Vinyl-$C_1$-$C_6$-Alkylether angeführt.

Die Pfropfgrundlage kann unvernetzt oder teilweise oder vollständig vernetzt sein. Die Vernetzung wird z.B. durch Copolymerisation von vorzugsweise 0,02 bis 5 Gew.%, insbesondere 0,05 bis 2 Gew.% eines vernetzenden Monomeren mit mehr als einer Doppelbindung erzielt. Geeignete vernetzende Monomere werden z.B. in der DE-A-27 26 256 und der EP-A-50 265 beschrieben.

Bevorzugte vernetzende Monomere sind Triallylcyanurat, Triallylisocyanurat, Triacryloylhexahydro-s-triazin und Trialkylbenzole.

Falls die vernetzenden Monomeren mehr als 2 polymerisierbare Doppelbindungen aufweisen, ist es vorteilhaft ihre Menge auf nicht mehr als 1 Gew.%, bezogen auf die Pfropfgrundlage, zu beschränken.

Besonders bevorzugte Pfropfgrundlagen sind Emulsionspolymerisate mit einem Gelgehalt von mehr als 60 Gew.% (bestimmt in Dimethylformamid bei 25 °C nach M. Hoffmann, H. Krömer, R. Kuhn, Polymeranalytik, Georg-Thieme-Verlag, Stuttgart, 1977).

Ebenfalls geeignet als Pfropfgrundlage sind Acrylat-Kautschuke mit einem Dienkern, wie sie z.B. in der EP-A-50 262 beschrieben werden.

Als Pfropfmonomere eignen sich besonders Styrol, $\alpha$-Methylstyrol, Acrylnitril, Methacrylnitril und Methylmethacrylat oder deren Mischungen, insbesondere solche aus Styrol und Acrylnitril im Gewichtsverhältnis von 1:1 bis 9:1.

Die Pfropfausbeute, d.h. der Quotient aus der Menge des aufgepfropften Monomeren und der Menge des eingesetzten Pfropfmonomeren liegt im allgemeinen im Bereich von 20 bis 80 %.

Kautschuke auf der Basis von Acrylaten, die erfindungsgemäß verwendet werden können, werden z.B. in der DE-A-24 44 584 und der DE-A-27 26 256 beschrieben.

Die Kautschuke C weisen vorzugsweise eine Glasübergangstemperatur von unter -30 °C, insbesondere von unter -40 °C auf.

Es versteht sich, daß auch Mischungen der vorstehend aufgeführten Kautschuktypen eingesetzt werden können.

Neben den wesentlichen Komponenten A) bis E) können die erfindungsgemäßen Formmassen übliche Zusatzstoffe und Verarbeitungshilfsmittel enthalten. Deren Anteil beträgt im allgemeinen bis zu 60, vorzugsweise bis zu 50 Gew.%, bezogen auf das Gesamtgewicht der Komponenten A) bis E).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente (außer Titandioxid), nicht verstärkende Füllstoffe und Weichmacher.

Oxidationsverzögerer und Wärmestabilisatoren, die den thermoplastischen Massen gemäß der Erfindung zugesetzt werden können, sind z.B. Halogenide von Metallen der Gruppe I des periodischen Systems, z.B. Natrium-, Kalium-, Lithium-Halogenide, ggf. in Verbindung mit Kupfer-(I)-Halogeniden, z.B. Chloriden, Bromiden oder Iodiden. Ferner sind sterisch gehinderte Phenole, Hydrochinone, substituierte Vertreter dieser Gruppe und Mischungen derselben, vorzugsweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2,0 Gew.% eingesetzt werden.

Gleit- und Entformungsmittel, die in der Regel in Mengen bis zu 1 Gew.% der thermoplastischen Masse zugesetzt werden, sind Stearinsäuren, Stearylalkohol, Stearinsäurealkylester und -amide sowie Ester des Pentaerythrits mit langkettigen Fettsäuren.

Unter den Zusatzstoffen sind auch Stabilisatoren, die die Zersetzung des roten Phosphors in Gegenwart von Feuchtigkeit und Luftsauerstoff verhindern. Als Beispiel hierfür seien Zinkoxid und Cadmiumoxid genannt.

Die erfindungsgemäßen Formmassen können nach an sich bekannten Verfahren hergestellt werden, indem man die Ausgangskomponenten in üblichen Mischvorrichtungen, wie Schneckenextrudern, Brabender-Mühlen oder Banbury-Mühlen mischt und anschließend extrudiert. Nach der Extrusion wird das Extrudat abgekühlt und zerkleinert. Die Mischtemperaturen liegen im allgemeinen im Bereich von 220 bis 300 °C.

Die Zugabe des Titandioxids kann direkt zur Schmelze erfolgen oder auch in Form von Pulver oder in Abmischung mit Kautschuk mit dem Polyamidgranulat abgemischt werden.

Die erfindungsgemäßen Formmassen zeichnen sich durch eine helle Farbe bei praktisch unveränderter Schlagzähigkeit gegenüber unpigmentierten Formmassen aus.

Beispiel 1

Polyhexamethylenadipinsäureamid mit einem K-Wert von 72 (nach Fikentscher, Cellulose-Chemie 13, 1932, S. 58) wurden in einem Fluidmischer mit 10 Gew.% Titandioxid und 10 Gew.% eines Ethylen-n-Butylacrylat-Maleinsäureanhydrid-Terpolymeren (Zusammensetzung 66:33:1 Gew.%) vermischt und anschließend in einem Extruder bei 270 bis 290 °C aufgeschmolzen. Gleichzeitig wurden 6 Gew.% roter Phosphor als Pulver unter Argonatmosphäre eingebracht. Über eine Öffnung weiter stromabwärts wurden 35 Gew.% Glasfasern als Endlosstrang (Roving) eindosiert.

Die homogene Mischung wurde ausgepreßt, in Strängen abgezogen, abgekühlt und anschließend granuliert.

Aus den Granulaten wurden Prüfkörper gespritzt und deren Schlagzähigkeit nach DIN 53 453 bestimmt. Der Brandtest wurde in Anlehnung an UL 94 durchgeführt.

Die Farbbeurteilung wurde mittels einer RAL-Farbtabelle an den Prüfkörpern vorgenommen.

Zur Bestimmung des löslichen Phosphors w urden Normkleinstäbe in den Abmessungen 4×6×50 mm gespritzt. Jeweils 50 dieser Normkleinstäbe wurden in destilliertem Wasser bei 60 °C 100 Tage lang gelagert. Das verdampfte Wasser wurde in regelmäßigen Abständen aufgefüllt. Nach dieser Zeit wurde eine Wasserprobe entnommen und der Gehalt an löslichem Phosphor (Phosphorsäure) in Wasser bestimmt.

Beispiel 2

Es wurde wie in Beispiel 1 gearbeitet, nur anstelle des Ethylen-n-Butylacrylat-Maleinsäureanhydrid-Kautschuks ein mit 0,5 Gew.% Maleinsäureanhydrid gepfropfter Ethylen-Propylen-Kautschuk (Gewichtsverhältnis Ethylen : Propylen = 3 : 1) eingesetzt.

Beispiel 3

Es wurde wie in Beispiel 1 gearbeitet, nur anstelle der Glasfasern als Verstärkungsmittel faserförmiges Wollastonit eingesetzt, welches als Batch mit dem Polyamid in Granulatform vor dem Extrudieren abgemischt wurde.

Vergleichsbeispiel 1

Polyhexamethylenadipinamid wie in Beispiel 1 wurde in einem Extruder aufgeschmolzen und in die Schmelze wurden, wie in Beispiel 1 beschrieben, 35 Gew.% Glasfasern und 6 Gew.% roter Phosphor eingebracht. Die weitere Verarbeitung erfolgte wie in Beispiel 1.

Vergleichsbeispiel 2

Es wurde wie in Beispiel 1 gearbeitet, jedoch kein Kautschuk zugesetzt.

Vergleichsbeispiel 3

Es wurde wie in Beispiel 1 gearbeitet, jedoch kein Titandioxid zugesetzt.

Die Ergebnisse der Untersuchungen sind der nachfolgenden Tabelle zu entnehmen.

Tabelle 1

| Zusammensetzung/% | Vergleichs-beispiel 1 | Vergleichs-beispiel 2 | Vergleichs-beispiel 3 | Beispiel 1 | Beispiel 2 | Beispiel 3 |
|---|---|---|---|---|---|---|
| Polyhexamethylenadipinamid | 58,1 | 48,1 | 48,1 | 38,1 | 38,1 | 38,1 |
| Glasfaser | 35,0 | 35,0 | 35,0 | 35,0 | 35,0 | 35,0[3] |
| Phosphor | 6,0 | 6,0 | 6,0 | 6,0 | 6,0 | 6,0 |
| CdO | 0,9 | 0,9 | 0,9 | 0,9 | 0,9 | 0,9 |
| $TiO_2$ | - | 10,0 | - | 10,0 | 10,0 | 10,0 |
| Kautschuk[1] | - | - | 10,0 | 10,0 | 10,0[2] | 10,0 |
| Schlagzähigkeit $a_n$/kJ $cm^{-2}$ (DIN 53 453) | 40 | 21 | 45 | 43 | 41 | 39 |
| Lösl. Phosphor (n. 100 Tagen)/ppm | 39 | 40 | 42 | 38 | 35 | 45 |
| Brandtest 1/8" (UL 94) | V0 | V0 | V0 | V0 | V0 | V0 |
| Farbbeurteilung | schwarzbraun[4] | hellgrau[5] | schwarzbraun[4] | hellgrau[5] | hellgrau[5] | hellgrau[5] |

[1] Ethylen-n-Butylacrylat-Maleinsäureanhydrid-Terpolymer (Zusammensetzung 66:33:1 Gew.%)
[2] Ethylen-Propylen-Kautschuk mit 0,5 % Maleinsäureanhydrid gepfropft
[3] anstelle von Glasfasern Wollastonit
[4] ähnlich RAL 8017
[5] ähnlich RAL 7036

## Patentansprüche

**1.** Thermoplastische Formmassen, enthaltend
A) 10-90 Gew.% eines Polyamids,

B) 7-60 Gew.% eines verstärkenden Füllstoffs,
C) 1-40 Gew.% Titandioxid,
D) 1-20 Gew.% roten Phosphor, und
E) 1-40 Gew.% eines Kautschuks.

**2.** Thermoplastische Formmassen nach Anspruch 1, dadurch gekennzeichnet, daß der verstärkende Füllstoff B) faserförmig ist.

**3.** Thermoplastische Formmassen nach Anspruch 2, dadurch gekennzeichnet, daß als verstärkender Füllstoff B) Wollastonit und/oder Glasfasern verwendet werden.

**4.** Verwendung der Formmassen gemäß den Ansprüchen 1 bis 3 zur Herstellung von Formkörpern.

**5.** Formkörper, erhältlich aus Formmassen gemäß den Ansprüchen 1 bis 4.

**Claims**

**1.** A thermoplastic molding material containing
A) 10-90% by weight of a polyamide,
B) 7-60% by weight of a reinforcing filler,
C) 1-40% by weight of titanium dioxide,
D) 1-20% by weight of red phosphorus and
E) 1-40% by weight of a rubber.

**2.** A thermoplastic molding material as claimed in claim 1, wherein the reinforcing filler B) is fibrous.

**3.** A thermoplastic molding material as claimed in claim 2, wherein the reinforcing filler B) used comprises wollastonite or glass fibers.

**4.** Use of a molding material as claimed in any of claims 1 to 3 for producing moldings.

**5.** A molding obtainable from a molding material as claimed in any of claims 1 to 4.

**Revendications**

**1.** Masses à mouler thermoplastiques, contenant
A) 10-90% en poids d'un polyamide,
B) 7-60% en poids d'une charge de renforcement,
C) 1-40% en poids de dioxyde de titane,
D) 1-20% en poids de phosphore rouge et
E) 1-40% en poids d'un caoutchouc.

**2.** Masses à mouler thermoplastiques selon la revendication 1, caractériseés en ce que la charge de reforcement B) est en forme de fibres.

**3.** Masses à mouler thermoplastiques selon la revendication 2, caractérisées en ce que de la wollastonite et/ou des fibres de verre sont utilisées comme charge de renforcement B).

**4.** Utilisation des masses à mouler selon l'une quelconque des revendications 1 à 3 pour la fabrication de corps moulés.

**5.** Corps moulés, obtenus à partir de masses à mouler selon l'une quelconque des revendications 1 à 4.